# EUROPEAN PATENT SPECIFICATION

(11) **EP 4 056 410 B1**
(45) Date of publication and mention of the grant of the patent: **14.05.2025**
(21) Application number: 21162230.3
(22) Date of filing: 12.03.2021
(51) Int. Cl.: B60L 53/16, G01K 1/12, H01R 13/66

(54) **ELECTRICAL CONNECTOR, CHARGING INLET DEVICE AND MANUFACTURING METHOD THEREOF**
ELEKTRISCHER VERBINDER, LADEEINGANGSVORRICHTUNG UND SEINES HERSTELLUNGSVERFAHREN
CONNECTEUR ÉLECTRIQUE, DISPOSITIF D'ENTRÉE DE CHARGE ET SON PROCÉDÉ DE FABRICATION

(43) Date of publication of application: 14.09.2022
(73) Proprietor: Aptiv Technologies AG, 8200 Schaffhausen (CH)
(72) Inventor: ZIEMBA, Robert, 30-384 Kraków (PL); LESNIAK, Pawel, 30-376 Kraków (PL); MLECZKO, Marek, 30-868 Kraków (PL); KAWALEC, Dominik, 32-084 Brzoskwinia (PL); PIESZKA-LYSON, Monika, 31-314 Kraków (PL)
(74) Representative: INNOV-GROUP

(56) References cited:
- WO-A1-2020/039344
- CN-U- 208 385 676
- DE-A1- 102015 004 313
- JP-A- 2020 176 970

## Description

### TECHNICAL FIELD

The present disclosure relates to an electrical connector intended for connection to a mating electrical connector and to a charging inlet device provided with the electrical connector. Such a charging inlet device can be mounted on a vehicle such as an electric vehicle or hybrid electric vehicle.

### BACKGROUND

In order to charge an electric battery mounted in a vehicle such as an electric vehicle, hybrid electric vehicle, etc., the vehicle is provided with a charging inlet device. During an electric charging operation of the battery, a charging connector (or charging outlet device) of a charging station is mated with the charging inlet device of the vehicle and high charging currents are transmitted. This may result in a high thermal power dissipation in the charging inlet device or in the charging connector. For safety reasons, it is required to monitor the temperature of the charging inlet device and/or the charging connector in order to detect any overheating. In case that an important rise of temperature is detected, the charging current can be reduced or even switched off.

The document WO 2020/039344 A1 discloses an electrical connector including a housing having a terminal channel with a power terminal in the terminal channel, and a temperature sensor assembly. The temperature sensor assembly includes a sealing pad holding the power terminal and a thermal shunt held by the sealing pad. The sealing pad is electrically insulative to electrically isolate the temperature sensor assembly from the power terminal, and thermally conductive. It is thermally coupled to the power terminal and to the thermal shunt. The terminal shunt is in contact with a thermal sensor. The thermal sensor monitors the temperature of the power terminal via a thermal path defined by the sealing pad and the thermal shunt. The thermal shunt is a solid body, separate and discrete from the sealing pad. It is manufactured separately from a highly thermally conductive material such as an aluminum oxide material, aluminum nitride, mullite, a thermally conductive plastic, a metal material (e.g., copper or aluminum), or a ceramic material.

The electrical connector disclosed in WO 2020/039344 A1 has several drawbacks. A first drawback is that the temperature sensor assembly is rather complicated to manufacture because the thermal shunt is a body separate and discrete from the sealing pad, that must be manufactured separately and then coupled to the sealing pad and arranged against the thermal sensor. A second drawback is that the thermal path between the power terminal and the thermal sensor includes a solid body to solid body connection between the temperature sensor and the thermal shunt. The thermal shunt only touches a top surface of the thermal sensor. As a result, the thermal contact between the thermal sensor and the shunt is limited. A third drawback is that there may be a risk to damage the thermal sensor by pressing the thermal shunt against its top surface. As the thermal shunt is a rigid body (e.g. metal or ceramic), it has its own mass that can vibrate during car driving. This may cause micro cracks of the sensor's solder joints to the printed circuit board in the long run.

Therefore, there is a need for another kind of thermal path between the power terminal and the thermal sensor that is a good trade-off for overcoming the different drawbacks of the prior art.

### SUMMARY

The present disclosure concerns an electrical connector as defined in claim 1.

The interior volume of the container is bigger than the thermal sensor so that the thermal sensor can be immersed in the thermal material, that is a thermally conductive material filling the container. Due to the thermal material, more heat travels to the thermal sensor and the heat transfer is faster. Such a configuration provides a better thermal contact between the thermal material and the thermal sensor than the thermal shunt described in WO 2020/039344 A1. In addition, it does not put a stress on the thermal sensor.

The seal has a first thermal conductivity and the thermal material has a second thermal conductivity. In some embodiments, the second thermal conductivity (thermal material) is higher than the first thermal conductivity (seal). In that case, the thermal material has better thermal conductive properties than the seal. However, the two thermal conductivities may be similar, or the thermal conductivity of the thermal material may even be higher than the thermal conductivity of the seal.

In an embodiment, the rear pocket is defined by a pocket wall protruding from said rear face.

Advantageously, the electrical connector further includes a printed circuit board having a front face on which the thermal sensor is mounted and the thermal material is compressed between the seal and the front face of the printed circuit board.

In an embodiment, the electrical connector further includes an inner housing, the printed circuit board is coupled to an inner housing, and the assembly of the printed circuit board and the inner housing is mounted to the rear chamber of the main housing and has a terminal opening receiving the power terminal.

In an embodiment, the electrical connector further includes an inner body holding a rear end portion of the power terminal, and the inner housing is coupled to the inner body.

In some embodiments, the electrical connector includes a number N of power terminals with N>1, a number M of thermal sensors with 1≤M≤N, and the seal has N terminal openings receiving the N power terminals respectively and M rear pockets forming M containers filled with the thermal material and receiving the M thermal sensors, immersed in the thermal material, respectively.

At least one rear pocket can be arranged in the space separating two adjacent terminal openings of the seal and the thermal sensor immersed in thermal material filling the corresponding container monitors the temperature of the two power terminals received in said two adjacent terminal openings.

The thermal material can have a viscosity adapted so that the thermal material does not flow out of a filled container and remains within the container when it is simply closed by placing a cover plate against the container's opening.

The present disclosure further concerns a charging inlet device to be mounted on a vehicle provided with an electric battery to be charged, including an electrical connector as previously defined.

The present disclosure further includes a vehicle including an electric battery and a charging inlet device as defined above.

The present disclosure also concerns a method as defined in claim 11.

The method can include a step of mounting the thermal sensor on a front face of a printed circuit board and a step of compressing the thermal material filling the container formed by the rear pocket between the seal and the front face of the printed circuit board while immersing the thermal sensor in the thermal material.

The method can further include the steps of
coupling the printed circuit board to an inner housing;
coupling a rear end portion of the power terminal to an inner body;
coupling the assembly of the inner body and power terminal to the assembly of the inner housing and printed circuit board, while inserting the power terminal into the terminal opening of the seal and the front charging port of the main housing.

### BRIEF DESCRIPTION OF THE DRAWINGS

Other features, purposes and advantages of the disclosure will become more explicit by means of reading the detailed statement of the nonrestrictive embodiments made with reference to the accompanying drawings.
Figures 1 to 10 illustrate different steps of assembling an electrical connector, according to an embodiment of the present disclosure.
Figure 11 is a perspective view of a seal of the electrical connector, according to an embodiment of the present disclosure.
Figure 12 is a first cross-sectional view of figure 10 showing a power terminal, a seal and a thermal sensor of the electrical connector, according to an embodiment of the present disclosure.
Figure 13 is a second cross-sectional view of figure 10 showing two power terminals, the seal and a thermal sensor monitoring the temperature of the two power terminals, according to an embodiment of the present disclosure; and
Figure 14 is a flowchart of a method of manufacturing the electrical connector, according to an embodiment of the present disclosure.

### DETAILED DESCRIPTION

The present disclosure concerns an electrical connector 101 and a charging inlet device 100 that can be used as a charging inlet for a vehicle, such as an electric vehicle or hybrid electric vehicle. The charging inlet device 100 includes the electrical connector 101 and means (in other words: elements) for mounting the electrical connector 101 to a vehicle, such as a mounting flange 102. The electrical connector 101 is intended to mate a charging connector (in other words: a charging outlet device) of a charging station.

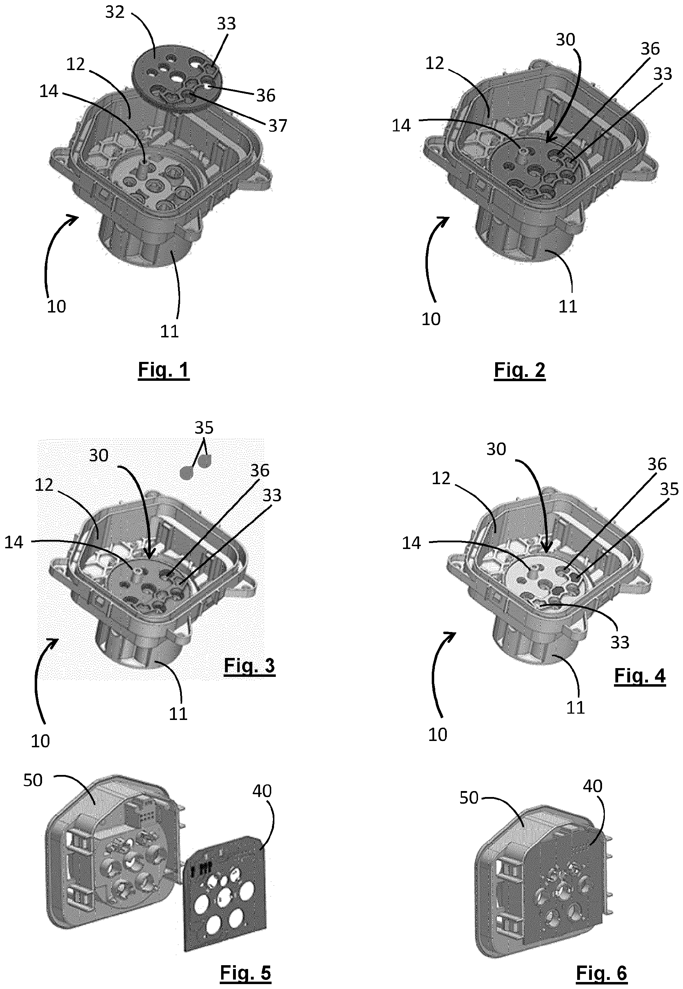

The electrical connector 101 according to an embodiment of the present disclosure will now be described with reference to the figures 1 to 13.

The electrical connector 101 has a main housing 10 and one or more power terminals 20. The main housing 10 extends between a front and a rear. It has a front charging port 11 open towards the front of the main housing 10. The front charging port 11 can include terminal channels (not shown).

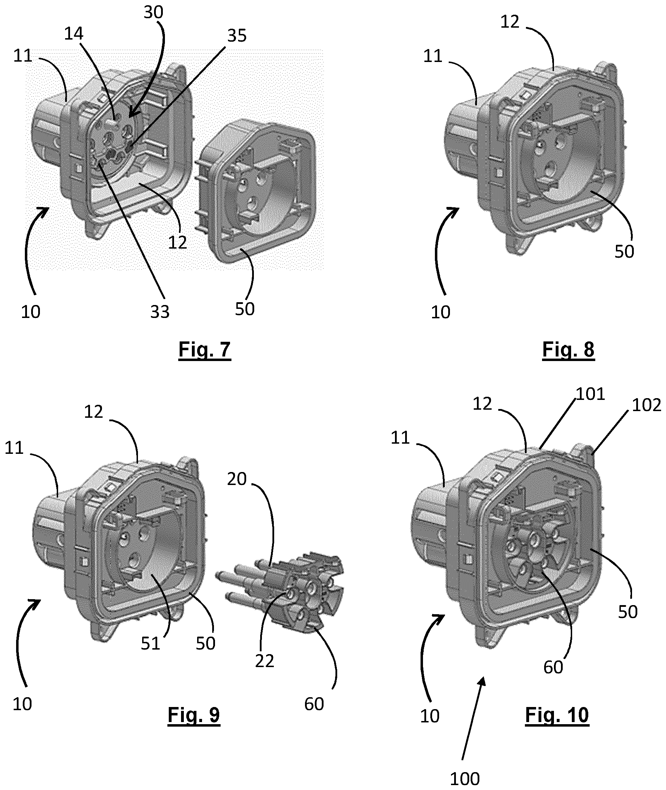

In an embodiment, the electrical connector 101 has four power terminals 20. Each power terminal 20 is coupled to (in other words: assembled with or mounted to) the main housing 10. It has a contact pin 21 at a front of the power terminal 20 and a cable connector 22 at a rear of the power terminal 20. The front contact pin 21 of each terminal 20 is arranged in the front charging port 11, in a terminal channel. It is intended to be mated to a terminal of a charging connector (in other words: a charging outlet device), received in the terminal channel. The rear cable connector 22 is to be connected to a power cable of the vehicle connected to an electrical battery to be charged. The power terminals 20 extend parallel to each other along a longitudinal axis, as shown in Figure 9.

The main housing 10 and the mounting flange 102 can be formed in one single piece (in other words: the mounting flange 102 can be integral with the main housing 10) or can be formed in two pieces joined together.

The electrical connector 101 is provided with a temperature monitoring system for monitoring the temperature of the power terminals 20 during charging. The charging power is controlled depending on the temperature of the power terminals 20. In case that an important rise of temperature is detected (i.e., when the temperature exceeds a maximum temperature), the charging power can be reduced or even switched off.

The temperature monitoring system includes one or more thermal sensors 41. In an embodiment, three thermal sensors 41 are used. The thermal sensors 41 are arranged in the rear chamber 12 of the main housing 10.

The temperature monitoring system further includes a seal 30 holding the power terminals 20. The seal 30 is coupled to (in other words: mounted to or assembled with) the main housing 10. Optionally, it is sealed to the main housing 10, for example by means of compressible ribs provided on the outer surface of the seal 30. The seal 30 can be positioned at a front entrance of the rear chamber 12, close to the front charging port 11. In an embodiment, the seal 30 is a disk-shaped body. It is formed in one single piece. The seal 30 can extend in a plane orthogonal to the longitudinal axis of the power terminals 20. The seal 30 is provided with terminal openings 36 to receive the power terminals 20. The number of terminal openings 36 may correspond to the number of power terminals 20.

The seal 30 is electrically insulative to electrically isolate the thermal sensors 41 from the power terminals 20. Furthermore, the seal 30 is thermally conductive to transfer the heat from the power terminals 20 to the thermal sensors 41, as will be explained in more details later. The seal 30 is part of a thermal path between each power terminal 20 and one or more thermal sensors 41.

The seal 30 can be manufactured from a material including silicone and one or more additional substance(s) to increase its thermal conductivity (i.e., its property that determines how much heat will flow in the material) and its thermal diffusivity (i.e., its property that determines how rapidly heat will flow within the material). Illustrative and non-limitative examples of a material for the seal 30 include the products NL9330, NL9360 and HTV SC1230TC manufactured by the company Momentive Performance Materials Inc. Alternatively, it can be manufactured from other thermally conductive and electrically insulative materials.

In an embodiment, the seal 30 is a disk-shaped body. However, it could have any other shape. The seal 30 has a front face 31 and a rear face 32, respectively facing the front and the rear of the main housing 10. The rear face 32 of the seal 30 is provided with one or more rear pockets 33. In an embodiment, the rear face 32 has three rear pockets 33. Each pocket 33 forms a container, also termed as a gap, 34 that has been filled with a thermal fluid 35, thermally conductive, and the thermal fluid 35 has taken the shape of the container 34. In an embodiment, the rear pockets 33 are defined by pocket walls protruding from the rear face 32 of the seal 30.

The terminal openings 36 of the seal 30 receive the corresponding power terminals 20. The interior surface of each terminal opening 36 can have ribs that are sealed to the power terminals 20. The ribs can be compressible. The rear pockets 33 are adjacent to the terminal openings 36. Each rear pocket 33 can be provided with one or more contact surfaces 37 arranged in the extension of the interior surfaces of terminal openings 36. Each contact surface has a shape that matches the external shape of the corresponding power terminal 20 to be contacted. Typically, the power terminals 20 are cylindrical and the contact surfaces 37 of the pockets 33 have the shape of a portion of a cylinder. Thanks to that, when a terminal opening 36 of the seal 30 receives the corresponding power terminal 20, said power terminal 20 is in contact with the seal 30 not only via the interior surface of the terminal opening 36 but also via one or more pocket contact surfaces 37. This improves the thermal contact between the power terminals 20 and the seal 30.

Alternatively, the pockets 33 could be formed by hollows created in the rear face 32 of the seal 30. In that case, each power terminal 20 is in contact with the seal 30 only via the interior surface of the corresponding terminal opening 36.

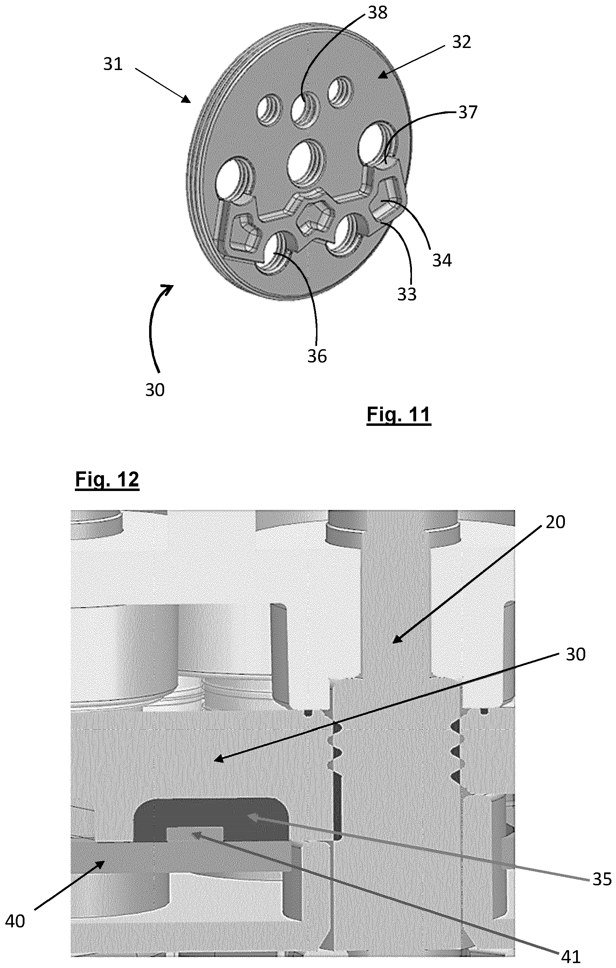

In an embodiment, each pocket 33 of the seal 30 is arranged between two adjacent terminal openings 36 of the seal 30. As shown in figure 11, there are three pockets 33 in the spaces separating the four terminal openings 36 (adjacent to each other). In this way, in operation, a thermal sensor 41 immersed in the thermal fluid 35 filling a pocket 33, that is intermediate between two adjacent terminal openings 36, monitors the temperature of the two power terminals 20 received in the two adjacent terminal openings 36.

Each thermal sensor 41 is immersed in the thermal fluid 35 filling a corresponding container (or gap) 34 and monitors the temperature of a power terminal 20 via a thermal path including the seal 30 and the thermal fluid 35.

The thermal fluid 35 is made from a material that is highly thermally conductive. The seal 30 has a first thermal conductivity and a first thermal diffusivity. The thermal fluid 35 has a second thermal conductivity and a second thermal diffusivity that are higher than the first thermal conductivity and the first thermal diffusivity, respectively. For example, the material of the seal 30 can have a thermal conductivity around 1,5 to 1,7 W/m.K, and the thermal fluid 35 can have a thermal conductivity around 4,5 W/m.K.

The thermal fluid 35 is a material having the property to be deformable so that it can take the shape of a container filled with it. For example, the thermal fluid 35 can be a paste or a liquid foam. Preferably, the thermal fluid 35 has a certain viscosity so that it remains within the container 34 filled with it (in other words: so that it does not flow out of the container), at room temperature, when the container 34 is not hermetically closed, for example with a cover plate placed against the container's opening. The thermal fluid could also be a material that becomes solid after being dispensed in the containers 34.

The temperature monitoring system further includes a printed circuit board 40. The thermal sensors 41 are mounted on the printed circuit board 40, her on a front surface of it. The thermal fluid 35 filling the containers 34 formed by the pockets 33 is compressed between the seal 30 and the printed circuit board 40. Thermal sensors 41 are arranged in the containers 34 and immersed in the thermal fluid 35. A small amount of thermal fluid 34 may have overflowed from each container 34 during the assembling and be compressed between the printed circuit board 40 and the edge of the container 34.

The thermal fluid 35 can be made from materials used as thermal interface materials. An illustrative and non-limitative example of such a thermal interface material is SilCool^{®} TGX 450 of the company Momentive Performance Materials Inc.

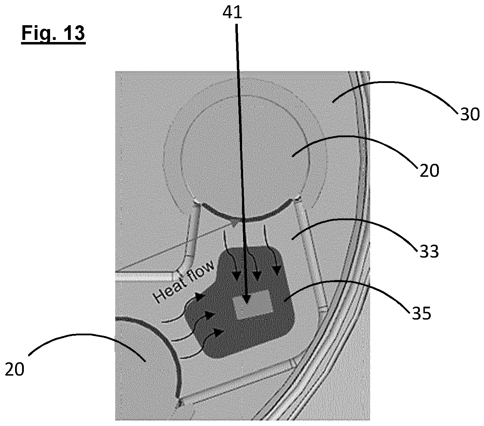

The thermal fluid 35 acts as a thermal bridge between the seal 30 and the thermal sensors 41. As the thermal sensors 41 are immersed in the thermal fluid 35 filling the gaps or containers 34 formed by the rear pockets 33 of the seal 30, the thermal contact between the thermal bridge 35 and the thermal sensors 41 is maximized, which improves the heat transfer between the power terminals 20 and the thermal sensors 41 as shown in figure 13.

In an embodiment, the electrical connector 101 further includes an inner housing 50 coupled to the printed circuit board 40 and an inner body 60 holding a rear end portion of the power terminal 20. The inner housing 50 is mounted to the rear chamber 12 of the main housing 10 and has terminal openings for receiving the power terminals 20. The inner body 60 is coupled to the inner housing 50.

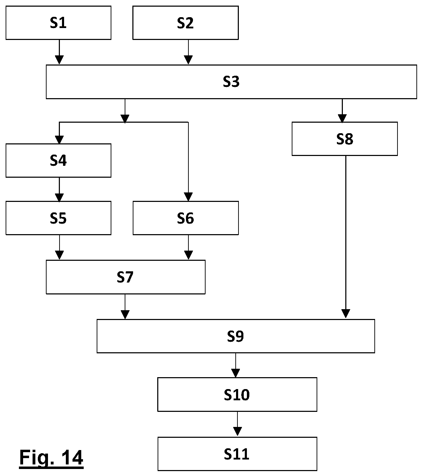

The method of manufacturing the electrical connector 101 will now be described, with reference to the figures 1-10 and 14.

The method has a step S1 of providing the main housing 10 and a step S2 of providing the seal 30, as shown in figure 1.

In a step S3, the seal 30 is coupled to the main housing 10, as shown in figure 2. The rear chamber 12 of the main housing 10 is open towards the rear and is provided with a front circular hollow 13 for receiving the disk-shaped seal 30 at the front of the chamber 12, close to the front charging port 11. As shown in figure 11, the seal 30 can be provided with an opening 38 for receiving a positioning pin 14 of the main housing 10, to facilitate the positioning of the seal 30 in the main housing 10. The rear face of the seal 30 provided with the rear pockets 33 is oriented towards the rear of the main housing 10.

The method further includes a step S4 of providing the thermal sensors 41 and a step S6 of providing an inner housing 50, as shown in figure 5. The thermal sensors 41 are previously mounted on a face of the printed circuit board 40, in a step S5. The printed circuit board 40 and the inner housing 50 have corresponding openings including terminal openings for receiving the power terminals 20. In a step S7, the inner housing 50 and the printed circuit board 40 are assembled together, as shown in figure 6. The face of the printed circuit board 40 supporting the thermal sensors 41 is arranged towards the outside of the assembly of the inner housing 50 and printed circuit board 40.

After placing the seal 30 in the main housing 10 in the step S3, the containers 34 formed by the rear pockets 33 of the seal 30 are filled with the thermal fluid 35, in a step S8, as shown in figures 3 and 4. Preferably, during the step S8, the seal 30 is positioned in a horizontal plane, the pockets 33 being open upwards. The thermal fluid 35 can be dispensed as a drop in the pocket containers 34, for example using an injection device (as schematically illustrated in figure 3). The volume of thermal fluid 35 dispensed in each container 34 approximatively corresponds to the interior volume of the container 34, or a little bit less. The thermal fluid 35 dispensed in each container 34 takes the shape of the container 34.

Then, in a step S9, the thermal sensors 41 are immersed in the thermal fluid 35 dispensed in the pockets 33 of the seal 30. In the step S9, the assembly of the printed circuit board 40 and inner housing 50 is coupled to the assembly of the main housing 12 and seal 30, as shown in figure 8. The immersion of the thermal sensors 41 in the thermal fluid 35 is performed by pressing down the printed circuit board 40 on the fluid 35, the plane of the seal 30 being horizontal (the rear pockets 33 open upwards). The thermal fluid 35 filling the containers 34 is thus compressed (in other words: sandwiched) between the seal 30 and the front face of the printed circuit board 40 while immersing the thermal sensor 41 in the thermal fluid 35. The top surface of the thermal fluid 35 gets flattened. This may cause that a small amount of fluid 35 overflows the containers 34 and is compressed (in other words: sandwiched) between the edge of the containers 34 and the printed circuit board 40.

The process further includes a step S10 of providing the power terminals 20, as shown in figure 9. The rear end portions of the power terminals 20, provided with the cable connectors, are previously mounted to an inner body 60. For example, the inner body 60 is disk-shaped. In the example shown in figure 9, the inner body 60 has more precisely the shape of a partial (truncated) disk. In a step S11, the assembly of the inner body 60 and power terminals 20 is coupled to (in other words: assembled with, mounted to) the assembly of the inner housing, printed circuit board, seal and main housing, as shown in figure 10. During the assembling, the power terminals 20 are inserted into the corresponding terminal openings provided in the inner housing 50, the printed circuit board 40, the seal 30, and the main housing 10. The disk-shaped inner body 60 is received in a corresponding disk-shaped compartment 51 of the inner housing 50, shown in figure 10. Once inserted into the assembly of the main housing 10 and inner housing 50, the power terminals 20 come into contact with the interior surfaces of the terminal openings 36 of the seal 30 (here with the inside ribs of the terminal openings 36) and with the contact surfaces 37 of the pockets 33. Furthermore, the front contact pins of the power terminals 20 are arranged in the front charging port 11 of the main housing 10 (in the terminal channels).

In operation, the thermal sensors 41 immersed in the thermal fluid 35 filling the containers or gaps 34 of the pockets 33 of the seal 30 monitor the temperature of the power terminals 20 via a thermal path including the seal 30 and the thermal fluid 35. The immersion of the thermal sensors 41 in the thermal fluid 35 allows to maximize the thermal contact between the thermal sensors 41 and the thermal bridge between the thermal sensors 41 and the seal 30, provided by the thermal fluid 35.

The thermal fluid 35 can be a paste or a liquid foam, at least when it is dispensed in the containers 34 formed by the pockets 33 (so that it can take the shape of the containers 34). Then, the thermal fluid 35 can remain in the form of a viscous liquid or it may become solid.

In the present disclosure, the electrical connector 101 is a part of the inlet device on the vehicle side. However, the electrical connector could be implemented in a charging connector of a charging station.

An analogous system for monitoring the temperature could be provided in such a charging connector.

In other embodiments, the number N of power terminals is different from four, depending on the type of the charging inlet. The number M of thermal sensors can also be different from three. More generally, the electrical connector 101 has a number N of power terminals 20 with N>1 and a number M of thermal sensors 41 with 1≤M≤N. In that case, the seal 30 has N terminal openings 36 receiving the N power terminals 20 respectively and M pockets 33 forming M containers 34 filled with the thermal fluid 35 and receiving the M thermal sensors 41, immersed in the thermal fluid 35, respectively.

## Claims

1. An electrical connector (101) including
a main housing (10) extending between a front and a rear and having a front charging port (11) open towards the front and a rear chamber (12);
a power terminal (20) having a front contact pin arranged in the front charging port (11) and a rear cable connector;
a thermal sensor (41);
a seal (30), electrically insulative and thermally conductive, holding the power terminal (20) received in a terminal opening (36) of the seal (30), the seal (30) being thermally coupled to the power terminal (20) and to the thermal sensor (41);
**characterized in that**
the seal (30) has a rear face (32) provided with a rear pocket (33) forming a container (34) filled with a thermal material (35), thermally conductive, that is either a paste or a foam, in a viscous liquid form or solidified, and has taken the shape of the container (34), and in which the thermal sensor (41) is immersed,
and the thermal sensor (41) is configured to monitor the temperature of the power terminal (20) via a thermal path including the seal (30) and the thermal material (35).

2. The electrical connector according to claim 1, wherein the seal (30) has a first thermal conductivity and the thermal material (35) has a second thermal conductivity that is higher than the first thermal conductivity.

3. The electrical connector according to any of claims 1 and 2, wherein the rear pocket (33) is defined by a pocket wall protruding from said rear face (32).

4. The electrical connector according to any of claims 1 to 3, further including a printed circuit board (40) having a front face on which the thermal sensor (41) is mounted and the thermal material (35) is compressed between the seal (30) and the front face of the printed circuit board (40).

5. The electrical connector according to claim 4, further including an inner housing (50) and wherein the printed circuit board (40) is coupled to said inner housing (50), and the assembly of the printed circuit board (40) and the inner housing (50) is mounted to the rear chamber (12) of the main housing (10) and has a terminal opening receiving the power terminal (20).

6. The electrical connector according to claim 5, further including an inner body (60) holding a rear end portion of the power terminal (20) and wherein the inner housing (50) is coupled to said inner body (60).

7. The electrical connector according to any of claims 1 to 6, including a number N of power terminals (20) with N>1, a number M of thermal sensors (41) with 1≤M≤N, and the seal (30) has N terminal openings receiving the N power terminals (20) respectively and M pockets (33) forming M containers (34) filled with the thermal material (35) and receiving the M thermal sensors (41), immersed in the thermal material (35), respectively.

8. The electrical connector according to claim 7, wherein at least one pocket (33) is arranged in the space separating two adjacent terminal openings (36) of the seal (30) and the thermal sensor (41) immersed in thermal material (35) filling the corresponding container (34) monitors the temperature of the two power terminals (20) received in said two adjacent terminal openings (36).

9. A charging inlet device (100) to be mounted on a vehicle provided with an electric battery to be charged, including an electrical connector (101) according to any of claims 1 to 8.

10. A vehicle including an electric battery and a charging inlet device (100) according to claim 9 to charge the electric battery.

11. A method of manufacturing an electrical connector, including the steps of :
providing (S1) a main housing (10) extending between a front and a rear and having a front charging port open towards the front and a rear chamber;
coupling (S3) a seal (30) to the main housing (10), the seal (30) being electrically insulative and thermally conductive and having a terminal opening (36) for holding the power terminal (20),
providing a thermal sensor (41);
providing a power terminal (20) having a front contact pin and a rear cable connector and inserting said power terminal (20) in the terminal opening of the seal and in the front charging port of the main housing (10);
thermally coupling the seal (30) to the power terminal (20) and to the thermal sensor (41);
**characterized in that**, the seal (30) having a rear face (32) provided with a rear pocket (33) forming a container (34), the method further includes the steps of
filling (S8) said container (34) with a thermal material (35), thermally conductive, that is either a paste or a liquid foam, so that the thermal material (35) takes the shape of the container (34);
then, immersing (S9) the thermal sensor (41) in the thermal material (35) so as to monitor the temperature of the power terminal (20) via a thermal path including the seal (30) and the thermal material (35);
wherein, after being dispensed in said container, the thermal material remains in a viscous liquid form or becomes solid.

12. The method of claim 11, further including a step (S5) of mounting the thermal sensor (41) on a front face of a printed circuit board (40) and a step (S9) of compressing the thermal material filling the container between the seal and the front face of the printed circuit board while immersing the thermal sensor in the thermal material.

13. The method according to claim 12, wherein further including the steps of
coupling (S7) the printed circuit board (40) to an inner housing (50);
coupling a rear end portion of the power terminal (20) to an inner body (60);
coupling (S9) the assembly of the inner body (60) and power terminal (20) to the assembly of the inner housing (50) and printed circuit board (40), while inserting the power terminal (20) into the terminal opening (36) of the seal (30) and the front charging port (11) of the main housing (10).

## Patentansprüche

1. Ein elektrischer Verbinder (101) mit
ein Hauptgehäuse (10), das sich zwischen einer Vorderseite und einer Rückseite erstreckt und eine nach vorne offene vordere Ladeöffnung (11) und eine hintere Kammer (12) aufweist;
einen Stromanschluss (20) mit einem im vorderen Ladeanschluss (11) angeordneten vorderen Kontaktstift und einem hinteren Kabelanschluss;
einen Wärmesensor (41);
eine Dichtung (30), die elektrisch isolierend und thermisch leitend ist und den Leistungsanschluss (20) hält, der in einer Anschlussöffnung (36) der Dichtung (30) aufgenommen ist, wobei die Dichtung (30) thermisch mit dem Leistungsanschluss (20) und mit dem thermischen Sensor (41) gekoppelt ist;
**dadurch gekennzeichnet, dass**
die Dichtung (30) eine Rückseite (32) aufweist, die mit einer hinteren Tasche (33) versehen ist, die einen Behälter (34) bildet, der mit einem wärmeleitenden Material (35) gefüllt ist, das entweder eine Paste oder ein Schaum ist, in einer viskosen flüssigen Form oder verfestigt ist und die Form des Behälters (34) angenommen hat, und in den der Wärmesensor (41) eingetaucht ist,
und der thermische Sensor (41) so konfiguriert ist, dass er die Temperatur des Stromanschlusses (20) über einen thermischen Pfad einschließlich der Dichtung (30) und des thermischen Materials (35) überwacht.

2. Elektrischer Steckverbinder nach Anspruch 1, wobei die Dichtung (30) eine erste Wärmeleitfähigkeit und das Thermomaterial (35) eine zweite Wärmeleitfähigkeit, die höher ist als die erste Wärmeleitfähigkeit.

3. Elektrischer Verbinder nach einem der Ansprüche 1 und 2, wobei die hintere Tasche (33) durch eine Taschenwand definiert ist, die von der hinteren Fläche (32) vorsteht.

4. Elektrischer Verbinder nach einem der Ansprüche 1 bis 3, ferner mit einer Leiterplatte (40) mit einer Vorderseite, auf der die thermische Sensor (41) montiert ist und das thermische Material (35) zwischen der Dichtung (30) und der Vorderseite der Leiterplatte (40) zusammengedrückt wird.

5. Elektrischer Verbinder nach Anspruch 4, der ferner ein inneres Gehäuse (50) aufweist, wobei die Leiterplatte (40) mit dem inneren Gehäuse (50) verbunden ist und die Baugruppe aus der Leiterplatte (40) und dem inneren Gehäuse (50) an der hinteren Kammer (12) des Hauptgehäuses befestigt ist (10) und hat eine Anschlussöffnung zur Aufnahme des Stromanschlusses (20).

6. Elektrischer Verbinder nach Anspruch 5, der ferner einen inneren Körper (60) aufweist, der einen hinteren Endabschnitt des Stromanschlusses (20) hält, und wobei das innere Gehäuse (50) mit dem inneren Körper (60) verbunden ist.

7. Elektrischer Verbinder nach einem der Ansprüche 1 bis 6, mit einer Anzahl N von Leistungsanschlüssen (20) mit N>1, einer Anzahl M von Wärmesensoren (41) mit 1≤M≤N, und die Dichtung (30) hat N Anschlussöffnungen, die jeweils die N Stromanschlüsse (20) aufnehmen, und M Taschen (33), die M Behälter bilden (34), die mit dem thermischen Material (35) gefüllt sind und die M thermischen Sensoren (41) aufnehmen, die in das thermische Material (35) eingetaucht sind.

8. Elektrischer Verbinder nach Anspruch 7, wobei mindestens eine Tasche (33) in dem Raum angeordnet ist, der zwei mindestens eine Tasche (33) in dem Raum angeordnet ist, der zwei benachbarte Anschlussöffnungen (36) der Dichtung (30) trennt, und der thermische Sensor (41), der in thermisches Material (35) eingetaucht ist, das den entsprechenden Behälter (34) füllt, Temperatur der beiden Stromanschlüsse (20) überwacht, die in den beiden benachbarten Anschlussöffnungen (36) aufgenommen sind.

9. Ladeeinlassvorrichtung (100) zur Montage an einem Fahrzeug, das mit einer aufzuladenden elektrischen Batterie versehen ist, mit einem elektrischen Anschluss (101) nach einem der Ansprüche 1 bis 8.

10. Fahrzeug mit einer elektrischen Batterie und einer Ladeanschlussvorrichtung (100) nach Anspruch 9 zum Laden der elektrischen Batterie.

11. Verfahren zur Herstellung eines elektrischen Verbinders, das die folgenden Schritte umfasst:
Bereitstellen (S1) eines Hauptgehäuses (10), das sich zwischen einer Vorderseite und einer Rückseite erstreckt und eine vordere Ladeöffnung, die zur Vorderseite hin offen ist, und eine hintere Kammer aufweist; Koppeln (S3) einer Dichtung (30) mit dem Hauptgehäuse (10), wobei die Dichtung (30) elektrisch isolierend und thermisch leitend ist und eine Anschlussöffnung aufweist (36) zur Aufnahme der Stromklemme (20), die einen Wärmesensor (41) aufweist;
Bereitstellen eines Stromanschlusses (20) mit einem vorderen Kontaktstift und einem hinteren Kabelanschluss und Einsetzen des Stromanschlusses (20) in die Anschlussöffnung Dichtung und in den vorderen Ladeanschluss des Hauptgehäuses (10);
thermische Kopplung der Dichtung (30) mit dem Netzanschluss (20) und dem Wärmesensor (41);
**dadurch gekennzeichnet, dass** die Dichtung (30) eine hintere Fläche (32) aufweist, die mit einer hinteren Tasche (33) versehen ist, die einen Behälter (34) bildet, wobei das Verfahren außerdem die folgenden Schritte umfasst Füllen (S8) des Behälters (34) mit einem Wärmeleitmaterial (35), das wärmeleitend ist und entweder eine Paste oder ein flüssiger Schaum ist, so dass das Wärmeleitmaterial (35) nimmt die Form Behälters (34) an;
dann Eintauchen (S9) des thermischen Sensors (41) in das thermische Material (35), um die Temperatur des Stromanschlusses (20) über einen thermischen Pfad, der die Dichtung (30) und das thermische Material (35) umfasst, zu überwachen;
wobei das thermische Material nach der Entnahme aus dem Behälter in einer viskosen flüssigen Form verbleibt oder fest wird.

12. Verfahren nach Anspruch 11, das ferner einen Schritt (S5) des Anbringens des Wärmesensors (41) an einer Vorderseite einer Leiterplatte (40) und einen Schritt (S9) des Zusammendrückens des den Behälter füllenden Wärmematerials zwischen der Dichtung und der Vorderseite der Leiterplatte umfasst, während der Wärmesensor in das Wärmematerial eingetaucht wird.

13. Verfahren nach Anspruch 12, das außerdem die folgenden Schritte umfasst Kopplung (S7) der Leiterplatte (40) mit einem Innengehäuse (50);
Koppeln eines hinteren Endabschnitts des Stromanschlusses (20) mit einem inneren Körper (60); Koppeln (S9) der Anordnung aus dem inneren Körper (60) und dem Stromanschluss (20) mit der Anordnung aus dem inneren Gehäuse (50) und der gedruckten Leiterplatte (40), während der Stromanschluss (20) in die Anschlussöffnung (36) der Dichtung eingeführt wird (30) und dem vorderen Ladeanschluss (11) des Hauptgehäuses (10).

## Revendications

1. Connecteur électrique (101) comprenant
un boîtier principal (10) s'étendant entre l'avant et l'arrière et comportant un port de charge avant (11) ouvert vers l'avant et une chambre arrière (12) ;
un terminal d'alimentation (20) comportant une broche de contact avant disposée dans le port de charge avant (11) et un connecteur de câble arrière ;
un capteur thermique (41) ;
un joint (30), électriquement isolant et thermiquement conducteur, maintenant la borne d'alimentation (20) reçue dans une ouverture de borne (36) du joint (30), le joint (30) étant thermiquement couplé à la borne d'alimentation (20) et au capteur thermique (41) ;
**caractérisé en ce que**
le joint (30) a une face arrière (32) pourvue d'une poche arrière (33) formant un récipient (34) rempli d'un matériau thermique (35), thermoconducteur, qui est soit une pâte, soit une mousse, sous forme de liquide visqueux ou solidifié, et qui a pris la forme du récipient (34), et dans lequel le capteur thermique (41) est immergé, et le capteur thermique (41) est configuré pour surveiller la température de la borne d'alimentation (20) via un chemin thermique comprenant le joint (30) et le matériau thermique (35).

2. Connecteur électrique selon la revendication 1, dans lequel le joint (30) a une première conductivité thermique et le matériau thermique (35) a une seconde conductivité thermique qui est supérieure à la première conductivité thermique.

3. Connecteur électrique selon l'une des revendications 1 et 2, dans lequel la poche arrière (33) est définie par une paroi de poche faisant saillie de ladite face arrière (32).

4. Connecteur électrique selon l'une des revendications 1 à 3, comprenant en outre une carte de circuit imprimé (40) ayant une face avant sur laquelle le capteur thermique (41) est monté et le matériau thermique (35) est comprimé entre le joint (30) et la face avant de la carte de circuit imprimé (40).

5. Le connecteur électrique selon la revendication 4, comprenant en outre un boîtier interne (50) et dans lequel la carte de circuit imprimé (40) est couplée audit boîtier interne (50), et l'ensemble de la carte de circuit imprimé (40) et du boîtier interne (50) est monté sur la chambre arrière (12) du boîtier principal (10) et possède une ouverture de borne recevant borne d'alimentation (20).

6. Connecteur électrique selon la revendication 5, comprenant en outre un corps interne (60) retenant une partie de l'extrémité arrière de la borne d'alimentation (20) et dans lequel le boîtier interne (50) est couplé à ce corps interne (60).

7. Connecteur électrique selon l'une des revendications 1 à 6, comprenant un nombre N de bornes de puissance (20) avec N>1, un nombre M de capteurs thermiques (41) avec 1≤M≤N, et le joint (30) a N ouvertures de bornes recevant les N bornes d'alimentation (20) respectivement et M poches (33) formant M conteneurs (34) rempli du matériau thermique (35) et recevant les M capteurs thermiques (41), immergés dans le matériau thermique (35), respectivement.

8. Le connecteur électrique selon la revendication 7, dans lequel au moins une poche (33) est disposée dans l'espace séparant deux ouvertures de bornes (36) adjacentes du joint (30) et le capteurs thermique (41) immergé dans le matériau thermique (35) remplissant le conteneur correspondant (34) surveille la température des deux bornes d'alimentation (20) reçues dans ces deux ouvertures de bornes adjacentes (36).

9. Dispositif d'entrée de charge (100) destiné à être monté sur un véhicule équipé d'une batterie électrique à charger, comprenant un connecteur électrique (101) selon l'une des revendications 1 à 8.

10. Véhicule comprenant une batterie électrique et un dispositif d'entrée de charge (100) selon la revendication 9 pour charger la batterie électrique.

11. Méthode de fabrication d'un connecteur électrique, comprenant les étapes suivantes :
fournir (S1) un boîtier principal (10) s'étendant entre l'avant et l'arrière et comportant un port de charge avant ouvert vers l'avant et une chambre arrière ; coupler (S3) un joint (30) au boîtier principal (10), le joint (30) étant électriquement isolant et thermiquement conducteur et comportant une ouverture de borne (36) pour maintenir la borne d'alimentation (20), fournissant un capteur thermique (41) ;
fournir une borne d'alimentation (20) ayant une broche de contact avant et un connecteur de câble arrière et insérer ladite borne d'alimentation (20) dans l'ouverture de la borne joint et dans le port de charge avant du boîtier principal (10) ;
coupler thermiquement le joint (30) à la borne d'alimentation (20) et au capteur thermique (41) ;
**caractérisé en ce que**, le joint (30) ayant face arrière (32) pourvue d'une poche arrière (33) formant un récipient (34), le procédé comprend en outre les étapes suivantes
remplir (S8) ledit conteneur (34) avec un matériau thermique (35), thermoconducteur, qui est soit une pâte, soit une mousse liquide, de sorte que le matériau thermique (35) prend la forme récipient (34) ;
ensuite, immerger (S9) le capteur thermique (41) dans le matériau thermique (35) de manière à surveiller la température de la borne d'alimentation (20) via un chemin thermique comprenant le joint (30) et le matériau thermique (35) ;
dans lequel, après avoir été distribué dans ledit récipient, le matériau thermique reste sous forme de liquide visqueux ou devient solide.

12. La méthode de la revendication 11, comprenant en outre une étape (S5) de montage du capteur thermique (41) sur une face avant d'une carte de circuit imprimé (40) et une étape (S9) de compression du matériau thermique remplissant le récipient entre joint et la face avant de la carte de circuit imprimé tout en immergeant le capteur thermique dans le matériau thermique.

13. Méthode selon la revendication 12, comprenant en outre les étapes suivantes
coupler (S7) la carte de circuit imprimé (40) à un boîtier intérieur (50) ;
coupler une partie de l'extrémité arrière de la borne d'alimentation (20) à un corps interne (60) ; coupler (S9) l'ensemble du corps interne (60) et de la borne d'alimentation (20) à l'ensemble du boîtier interne (50) et de la carte de circuit imprimé (40), tout en insérant la borne d'alimentation (20) dans l'ouverture de la borne (36) du joint d'étanchéité (30) et le port de charge avant (11) du boîtier principal (10).
